# EUROPÄISCHE PATENTSCHRIFT

(11) **EP 3 383 687 B1**
(45) Veröffentlichungstag und Bekanntmachung des Hinweises auf die Patenterteilung: **01.01.2020**
(21) Anmeldenummer: 16804792.6
(22) Anmeldetag: 30.11.2016
(51) Int. Cl.: B60K 15/03, B60K 15/07, B60K 15/063

(54) **KRAFTFAHRZEUG MIT ZUMINDEST ZWEI TANKS FÜR DIE AUFNAHME VON BRENNSTOFF UNTER HOHEM DRUCK**
MOTOR VEHICLE WITH AT LEAST TWO TANKS FOR STORING FUEL UNDER HIGH PRESSURE
VÉHICULE AUTOMOBILE AVEC AU MOINS DEUX RÉSERVOIRS POUR LE STOCKAGE DE CARBURANT SOUS HAUTE PRESSION

(30) Priorität: 03.12.2015 DE 102015224243
(43) Veröffentlichungstag der Anmeldung: 10.10.2018
(73) Patentinhaber: Bayerische Motoren Werke Aktiengesellschaft, 80809 München (DE)
(72) Erfinder: PELGER, Andreas, 85737 Ismaning (DE); SZOUCSEK, Klaus, 85778 Haimhausen (DE)
(86) Internationale Anmeldenummer: PCT/EP2016/079309
(87) Internationale Veröffentlichungsnummer: WO 2017/093334

(56) Entgegenhaltungen:
- DE-A1-102014 209 257
- DE-T5-112008 003 549
- DE-U1-202011 108 934
- US-A1- 2011 120 736
- US-A1- 2014 097 260

## Beschreibung

Die Erfindung betrifft ein zweispuriges mehrachsiges Kraftfahrzeug mit zumindest zwei Brennstoff-Tanks, in denen ein Brennstoff zur Erzeugung von Antriebsenergie für ein Fahrzeug-Antriebsaggregat unter hohem Druck in der Größenordnung von 300 bar und mehr speicherbar ist, wobei jeder Tank eine Sicherheitsventil-Einrichtung mit einem nur einen Teilbereich der Tank-Oberfläche überwachenden temperatursensitiven Element aufweist, welche auf höhere bspw. bei einem Brand auftretende Temperaturen hin zumindest eine Teilmenge des gespeicherten Brennstoffs aus dem jeweiligen Tank entweichen lässt. Zum Stand der Technik wird beispielshalber auf die DE 11 2008 003 549 T5 verwiesen.

Hochdrucktanks für Fahrzeuge, in denen bspw. Wasserstoff (als Energieträger für einen Energiewandler für die Erzeugung von Antriebsenergie) gespeichert wird, müssen im Fall eines Fahrzeug-Brandes entlastet werden, um keine sicherheitskritische Situation entstehen zu lassen. Hierfür wird ggf. zumindest eine Teilmenge des gespeicherten Wasserstoffs rechtzeitig und gezielt in die Umgebung abgeblasen. Ein Fahrzeug-Brand liegt dabei auch dann vor, wenn lediglich bspw. ein Reifen eines Fzg.-Rades brennt, was bspw. mutwillig von einer Person herbeigeführt werden könnte. Eine schnellstmögliche Reaktion auf eine solche Notsituation ist daher angesagt, kann jedoch dann nicht mit absoluter Sicherheit erfolgen, wenn die Tanks mit ihren Sicherheitsventil-Einrichtungen mit wie oftmals in diesen integrierten temperatursensitiven Elementen solchermaßen angeordnet sind, wie dies in der eingangs genannten Schrift gezeigt ist.

Eine Abhilfemaßnahme für diese Problematik aufzuzeigen, ist Aufgabe der vorliegenden Erfindung.

Die Lösung dieser Aufgabe ist für ein Kraftfahrzeug nach dem Oberbegriff des Anspruchs 1 dadurch gekennzeichnet, dass die temperatursensitiven Elemente zumindest zweier Tanks solchermaßen angeordnet sind, dass sich der Abstand zwischen einem linksseitigen Rad derjenigen Fahrzeug-Achse, in deren Nähe die zumindest zwei Brennstoff-Tanks im Fahrzeug angeordnet sind, und dem diesem Rad nächstliegenden temperatursensitiven Element nicht signifikant vom Abstand des anderen dieser beiden temperatursensitiven Elemente vom rechtsseitigen Rad dieser Achse unterscheidet. Als ein nicht signifikanter Abstandsunterschied wird dabei ein über Luftlinie gemessener Abstand in der Größenordnung von 25% der Breite des Fahrzeugs erachtet. Vorteilhafte Aus- und Weiterbildungen sind Inhalt der Unteransprüche.

Zunächst sei auf den Begriff des bzw. eines temperatursensitiven Elements eingegangen. Hierbei kann es sich um ein Element handeln, welches auf irgendeine geeignete Weise die lokal, d.h. in näherer Umgebung des temperatursensitiven Elements herrschende Temperatur misst und dieses Ergebnis weitergibt, so bspw. an eine elektronische oder auch mechanische Steuereinheit, welche im Fall einer unzulässig hohen Temperatur ein Öffnen der Sicherheitsventileinrichtung bzw. eines in dieser vorgesehenen Sicherheitsventils veranlasst, so dass dann eine Teilmenge von Brennstoff (bspw. Wasserstoff) aus dem Tank entweichen kann. Beim temperatursensitiven Element kann es sich aber auch um ein beide Funktionen innehabendes Element handeln, welches bspw. bei Vorliegen einer unzulässig hohen Temperatur schmilzt oder birst und dadurch eine im Tank vorgesehene und zuvor durch dieses Element verschlossene Ausströmöffnung freilegt.

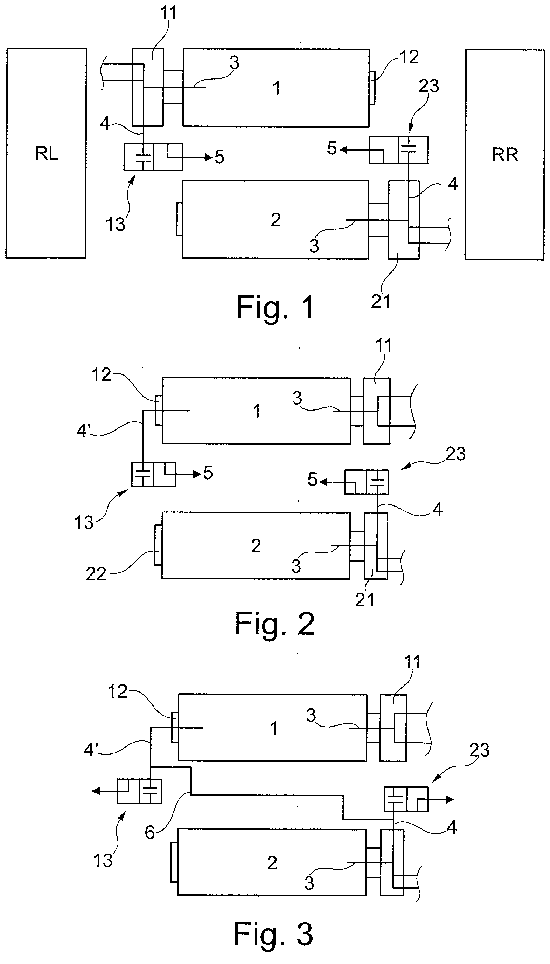

Nun auf die soweit vorgeschlagenen Merkmale bzw. Maßnahmen eingehend ist damit sichergestellt, dass sich sowohl im Falle eines Brandes (bzw. Feuers) an einem linksseitigen Fzg.-Reifen als auch an einem rechten Fahrzeug-Reifen jeweils relativ nahe ein temperatursensitives Element befindet, so dass - der einfacheren Darstellung nochmals auf die DE 11 2008 003 549 T5 und die dortige Figur 1(C) Bezug nehmend - im Falle eines Feuers am rechtsseitigen Reifen dieses Feuer nicht erst über sämtliche Tanks hinweg zu den nur linksseitig vorgesehenen temperatursensitiven Elementen gelangen muss, ehe diese reagieren können. Vielmehr kann mit der vorliegend vorgeschlagenen Anordnung der temperatursensitiven Elemente im Falle eines einseitigen Brandes praktisch sofort reagiert werden. Wenn dabei analog diesem bereits mehrfach genannten Stand der Technik die Brennstoff-Tanks zumindest annähernd zylindrisch geformt sind und mit ihrer Zylinderachse in Fzg.-Querrichtung liegend im Fahrzeug verbaut sind, so ist im Falle zweier Tanks bei einem der beiden Tanks das temperatursensitive Element linksliegend, d.h. am linken Kopf- oder Fußbereich des Tanks, und dasjenige des anderen Tanks im Fahrzeug rechtsliegend, d.h. am rechten Kopf- oder Fußbereich des Tanks angeordnet.

Im vorstehend genannten Fall, in welchem auch mehr als zwei Brennstoff-Tanks vorgesehen sein können, kann weiterhin vorgesehen sein, dass die Befüll- und Entnahmeventilvorrichtungen der Tanks bezogen auf die Grundfläche des Fahrzeugs auf der gleichen Seite des Fahrzeugs liegen. Das Verlegen der Leitungen zu den Befüll- und Entnahmeventilvorrichtungen der mehreren Tanks wird dadurch erheblich vereinfacht. Hingegen ist selbst in dem Falle, dass jedenfalls bei einem der Tanks das temperatursensitive Element in der Sicherheitsventileinrichtung und diese ihrerseits in der Befüll- und Entnahmeventilvorrichtung integriert ist, der Aufwand dadurch, dass nun bei zumindest einem der anderen Tanks zumindest das temperatursensitive Element an dessen anderes, der Befüll- und Entnahmeventilvorrichtung gegenüberliegendes Ende gelegt ist, noch vertretbar gering. Beispielsweise kann eine gemeinhin auch unter der Abkürzung "TPRD" bekannte Sicherheitsventilvorrichtung mit integriertem temperatursensitiven Element auch in den sog. "Blind-Boss" integriert werden, bei dem es sich um einen Verschlußstopfen für einen fertigungstechnisch bedingten Teildurchbruch im Fußbereich derzeit entwickelter Hochdruck-Tanks für Kraftfahrzeuge handelt, welcher Teildurchbruch ohnehin verschlossen werden muss bzw. nun mit einem "TPRD" mit Blindstopfen-Funktion verschlossen werden kann. Gegenüberliegend kopfseitig kann sich dann an diesem Tank eine einfache Befüll- und Entnahmeventilvorrichtung ohne integriertem "TPRD" befinden.

Im Sinne einer vorteilhaften Weiterbildung können die Sicherheitsventileinrichtungen einschließlich deren temperatursensitiven Elementen sämtlicher im Fahrzeug verbauter Brennstoff-Tanks solchermaßen ausgelegt sein, dass ein temperaturbedingtes Öffnen der Sicherheitsventileinrichtung eines der Tanks auch an der Sicherheitsventileinrichtung(en) des oder zumindest eines anderen Tanks ein Ausströmen von im Tank befindlichem Brennstoff ermöglicht. Damit sind kritische Mengen von Brennstoff bzw. Wasserstoff schnellstmöglich aus der kompletten Tankanlage des Fahrzeugs abführbar. Eine mögliche Ausführungsform hierfür ist, dass die Sicherheitsventileinrichtungen der Brennstoff-Tanks solchermaßen angeordnet sind, dass eine Abblaseöffnung einer ersten Sicherheitsventileinrichtung, deren temperatursensitives Element nahe einer ersten (bspw. der linken) Fahrzeugseite liegt, zum nahe einer zweiten (bspw. der rechten) Fahrzeugseite liegenden temperatursensitiven Element einer zweiten Sicherheitsventileinrichtung hin ausgerichtet ist. Wenn somit aus einer bspw. linksseitig im Fahrzeug liegenden Sicherheitsventileinrichtung eines ersten Tanks Wasserstoff ausströmt, weil nahe dieser Stelle ein Brand ausgebrochen ist, so entzündet sich dieser Wasserstoff und es wird die sich damit ergebende Flamme aufgrund der vorgeschlagenen Ausrichtung der Abblaseöffnung direkt zur im Fahrzeug rechtsliegenden Sicherheitsventileinrichtung bzw. zu deren temperatursensitiven Element hin gerichtet, so dass auch diese zweite Sicherheitsventileinrichtung baldmöglichst öffnet. Eine andere oder zusätzliche Möglichkeit für ein quasi gegenseitiges Öffnen von einander im Fahrzeug praktisch einander gegenüber liegenden Sicherheitsventileinrichtungen (bzw. temperatursensitiven Elementen der Sicherheitsventileinrichtungen) besteht darin, dass die Sicherheitsventileinrichtungen zumindest zweier Tanks über eine Druckleitung miteinander verbunden sind, welche an die dem Speichervolumen des jeweiligen Tanks zugewandte Seite der Sicherheitsventileinrichtungen angeschlossen ist. Über die besagte Druckleitung sind die Speichervolumen zumindest zweier Tanks praktisch direkt miteinander verbunden, so dass bei Öffnen einer einzigen Sicherheitsventileinrichtung der Tankinhalt aller miteinander verbundener Tanks durch diese ausströmen kann. Mit einer derartigen Gestaltung kann zur Vereinfachung des Aufbaus auch nur eine einzige gemeinsamen Befüll- und Entnahmeventilvorrichtung für die über die besagte Druckleitung miteinander verbundenen Brennstoff-Tanks vorgesehen sein.

Zurückkommend auf die Problematik, dass einer der Fahrzeug-Reifen in Brand gerät, wird weiterhin vorgeschlagen, diejenigen Bereiche des Fahrzeug-Aufbaus, welche einen die Räder einer tanknahen Fahrzeug-Achse umgebenden Raum begrenzen, flammhemmend auszubilden. Gedacht ist hierbei insbesondere an entsprechende Auskleidungselemente in den Radhäusern des Fahrzeug-Aufbaus, die bestmöglich verhindern können, dass ein dort ausbrechendes bzw. ein dorthinein gelegtes Feuer auf die Außenseiten der Brennstoff-Tanks des Fahrzeugs überspringt.

In den beigefügten Prinzipskizzen sind im weiteren erläuterte Ausführungsbeispiele auf das wesentliche stark abstrahiert dargestellt. In den **Figuren 1 - 3** gezeigt sind jeweils in Draufsicht auf die Fahrbahn zwei in einem nicht dargestellten Fahrzeug mit ihrer Längsachse in Fzg.-Querrichtung im Bereich von dessen Hinterachse liegend und in Fzg.-Fahrtrichtung hintereinander angeordnet verbaute Brennstoff-Tanks. Lediglich in Fig.1 sind schematisch noch das linke und rechte Hinterrad des Fahrzeugs bzw. Rad der Fzg.-Hinterachse dargestellt.

In allen Figuren ist mit der Bezugsziffer 1 ein erster Brennstoff-Tank und mit der Bezugsziffer 2 ein zweiter Brennstofftank gekennzeichnet, in welchen Tanks 1, 2 ein Brennstoff, insbesondere Wasserstoff, unter hohem Druck in der Größenordnung von bis zu 600 bar speicherbar ist. An der Kopfseite jedes Tanks 1, 2 ist eine Befüll- und Entnahmeventileinrichtung 11 (für den Tank 1) bzw. 21 (für den Tank 2) vorgesehen, die über eine Leitung 3 mit dem Speichervolumen des zugehörigen Tanks 1 bzw. 2 verbunden ist. Bestandteil dieser Befüll- und Entnahmeventileinrichtungen 11, 21 sind dem Fachmann bekannte diverse Ventile und Anschlüsse für Befüll- und Entnahmeleitungen, welche für die vorliegende Erfindung keine Rolle spielen und daher auch nicht dargestellt sind. An der der Kopfseite gegenüberliegenden Fußseite der Tanks 1, 2 ist jeweils ein Blind-Boss 12 bzw. 22 vorgesehen, d.h. ein fertigungstechnisch bedingter Verschlussstopfen zum Speichervolumen des jeweiligen Tanks 1, 2.

Mit gängiger Schaltventilsymbolik dargestellt ist weiterhin eine für jeden Tank 1, 2 vorgesehene Sicherheitsventileinrichtung 13 bzw. 23, die über eine Abführleitung 4 oder 4' im offenen Zustand das jeweilige Tank-Speichervolumen mit der Umgebung verbindet und im in sämtlichen Figuren dargestellten geschlossenen Zustand ein Ausströmen von Brennstoff bzw. Wasserstoff aus dem jeweiligen Tank 1, 2 in die Umgebung verhindert. Eine Abblaseöffnung 5 der Sicherheitsventileinrichtung 13 bzw. 23, über welche in deren Offen-Zustand der der aus dem Speichervolumen ausströmende Wasserstoff in die Umgebung abgeblasen wird, ist solchermaßen gestaltet und ausgerichtet, dass der austretende Wasserstoff mit einem Impuls in Richtung des Pfeiles 5 strömt. Ferner ist in jeder hier gezeigten Sicherheitsventileinrichtung 13, 23 ein nicht gezeigtes temperatursensitives Element enthalten, welches bei Erkennen einer unzulässig hohen, insbesondere im Falle eines Brandes auftretenden Temperatur die zugehörige Sicherheitsventileinrichtung 13 bzw. 23 in ihre geöffnete Position überführt.

Beim Ausführungsbeispiel nach **Fig.1** sind die Tanks 1, 2 quasi zur Fahrzeug-Längsachse gespiegelt verbaut, so dass die Befüll- und Entnahmeventileinrichtung 11 im Fahrzeug linksseitig liegt, während die Befüll- und Entnahmeventileinrichtung 21 rechtsseitig im Fahrzeug liegt. In jeder Befüll- und Entnahmeventileinrichtung 11, 21 ist ein Abzweig der bereits genannten und zur jeweiligen Sicherheitsventileinrichtung 13 bzw. 23 führenden Abführleitung 4 von der mit dem Tank-Speichervolumen verbundenen Leitung 3 vorgesehen. Praktisch direkt neben jeder Befüll- und Entnahmeventileinrichtung 11, 21 ist die zugehörige, d.h. dem jeweiligen Tank 1 bzw. 2 zugeordnete Sicherheitsventileinrichtung 13 bzw. 23 vorgesehen.

Nur in diese Figur 1 schematisch dargestellt sind weiterhin das linksseitige Rad RL der nicht weiter dargestellten Fahrzeug-Hinterachse, nahe derer die Brennstoff-Tanks 1, 2 im Fahrzeug angeordnet sind, sowie das rechtsseitige Rad RR der Hinterachse. Mit der hier gezeigten Anordnung der Sicherheitsventileinrichtungen 13, 23 (mit den darin integrierten temperatursensitiven Elementen) ist gewährleistet, dass sich der Abstand zwischen dem linksseitigen Rad RL und dem diesem Rad RL nächstliegenden temperatursensitiven Element, welches sich hier in der Sicherheitsventileinrichtung 13 befindet, nicht signifikant vom Abstand des anderen sich in der Sicherheitsventileinrichtung 23 befindenden temperatursensitiven Elements vom rechtsseitigen Rad RL unterscheidet.

Wie durch die Pfeile 5 an den Sicherheitsventileinrichtungen 13, 23 dargestellt ist, sind deren Abblaseöffnungen 5 einander zugewandt, so dass bspw. aus der geöffneten linken Sicherheitsventileinrichtung 13 austretender Wasserstoff, der sich bei einem Brand in diesem Bereich entzündet, ohne welchen Brand in diesem Bereich die Sicherheitsventileinrichtung 13 nicht geöffnet wäre, als Flamme direkt auf die rechte Sicherheitsventileinrichtung 23 strömt, so dass letztere soweit sie noch nicht geöffnet ist, sofort öffnet.

Beim Ausführungsbeispiel nach **Fig.2** sind die Tanks 1, 2 gleich ausgerichtet verbaut, so dass jede Befüll- und Entnahmeventileinrichtung 11, 21 im Fahrzeug (hier) rechtsseitig liegt. Die Sicherheitsventileinrichtung 23 des Tanks 2 ist (analog Fig.1) direkt neben der Befüll- und Entnahmeventileinrichtung 21 vorgesehen, während die Sicherheitsventileinrichtung 13 des Tanks 1 im Bereich der Fußseite des Tanks 1 angeordnet und über eine dessen Blind-Boss 12 durchdringende Abführleitung 4' mit dem Speichervolumen des Tanks 1 verbunden ist. Die Abführleitung 4' dieser Sicherheitsventileinrichtung 13 von Fig.2 hat somit die gleiche Funktion wie die Abführleitung 4 in der Befüll- und Entnahmeventileinrichtung 21 von Fig.2 oder derjenigen in den Befüll- und Entnahmeventileinrichtungen 11, 21 von Fig.1, während in der Befüll- und Entnahmeventileinrichtung 11 von Fig.2 selbstverständlich keine Leitung 4 erforderlich ist.

Nicht gezeigt sind hier - ebenso wie in der später erläuterten Fig.3 die Räder RL und RR des Fahrzeugs, jedoch gilt für die Abstandsverhältnisse hier das gleiche wie zu Fig.1 ausgeführt.

Auch beim Ausführungsbeispiel nach Fig.2 sind analog Fig.1 die Abblaseöffnungen 5 der beiden Sicherheitsventileinrichtungen 13, 23 einander zugewandt, so dass bspw. aus der geöffneten linken Sicherheitsventileinrichtung 13 austretender Wasserstoff, der sich bei einem Brand in diesem Bereich entzündet, ohne welchen Brand in diesem Bereich die Sicherheitsventileinrichtung 13 nicht geöffnet wäre, als Flamme direkt auf die rechte Sicherheitsventileinrichtung 23 strömt, so dass letztere soweit sie noch nicht geöffnet ist, sofort öffnet.

Auch beim Ausführungsbeispiel nach **Fig.3** sind die Tanks 1, 2 gleich ausgerichtet verbaut, wenngleich deren Ausrichtung für dieses Ausführungsbeispiel nicht von Bedeutung ist. Wesentlich ist jedoch auch hier, dass eine der Sicherheitsventileinrichtungen 13, 23 bzw. insbesondere deren nicht gezeigtes temperatursensitives Element linksseitig im Fahrzeug angeordnet ist (hier die Sicherheitsventileinrichtung 13), während die andere und hier die Sicherheitsventileinrichtung 23 rechtsseitig im Fahrzeug angeordnet ist, weshalb die Sicherheitsventileinrichtung 13 wieder über eine den Blind-Boss 12 durchdringende Abführleitung 4' mit dem Speichervolumen des Tanks 1 verbunden ist, während die Sicherheitsventileinrichtung 23 über eine Abführleitung 4 und die Leitung 3 in der Befüll- und Entnahmeventileinrichtungen 21 dem Speichervolumen des Tanks 2 verbunden ist. Abweichend von den zuvor erläuterten Ausführungsbeispielen sind beim Ausführungsbeispiel von Fig. 3 die beiden Sicherheitsventileinrichtungen 13, 23 über eine Druckleitung 6 miteinander verbunden, bzw. es verbindet diese Druckleitung 6 konkret die Abführleitung 4 (der Sicherheitsventileinrichtung 23) mit der Abführleitung 4' der Sicherheitsventileinrichtung 13. Ist nur eine der beiden Sicherheitsventileinrichtungen 13, 23 geöffnet, so kann durch diese dank der Druckleitung 6 Wasserstoff aus beiden Tanks 1, 2 in die Umgebung abgeführt werden. Selbstverständlich ist die Druckleitung 6 geeignet sicher zu gestalten und insbesondere vor jeglicher Beschädigung zu schützen.

## Patentansprüche

1. Zweispuriges mehrachsiges Kraftfahrzeug mit zumindest zwei Brennstoff-Tanks (1, 2), in denen ein Brennstoff zur Erzeugung von Antriebsenergie für ein Fahrzeug-Antriebsaggregat unter hohem Druck in der Größenordnung von 300 bar und mehr speicherbar ist, wobei jeder Tank (1, 2) eine Sicherheitsventil-Einrichtung (13, 23) mit einem nur einen Teilbereich der Tank-Oberfläche überwachenden temperatursensitiven Element aufweist, welche auf höhere, beispielsweise bei einem Brand auftretende Temperaturen hin zumindest eine Teilmenge des gespeicherten Brennstoffs aus dem jeweiligen Tank (1, 2) entweichen lässt,
**dadurch gekennzeichnet, dass** die temperatursensitiven Elemente zumindest zweier Tanks (1, 2) solchermaßen angeordnet sind, dass sich der Abstand zwischen einem linksseitigen Rad (RL) derjenigen Fahrzeug-Achse, in deren Nähe die zumindest zwei Brennstoff-Tanks (1, 2) im Fahrzeug angeordnet sind, und dem diesem Rad (RL) nächstliegenden temperatursensitiven Element nicht signifikant vom Abstand des anderen dieser beiden temperatursensitiven Elemente vom rechtsseitigen Rad (RR) dieser Achse unterscheidet.

2. Kraftfahrzeug nach Anspruch 1 mit zumindest annähernd zylindrischen Brennstoff-Tanks (1, 2), welche mit ihrer Zylinderachse in Fahrzeug-Querrichtung liegend verbaut sind und wobei das temperatursensible Element des einen Tanks im Fahrzeug linksliegend und derjenige des anderen Tanks im Fahrzeug rechtsliegend angeordnet ist.

3. Kraftfahrzeug nach Anspruch 1 oder 2, wobei die Tanks (1, 2) solchermaßen angeordnet sind, dass eine Befüll- und Entnahmeventilvorrichtung (11, 21) jedes Tanks bezogen auf die Grundfläche des Fahrzeugs auf der gleichen Seite liegen.

4. Kraftfahrzeug nach einem der vorangegangenen Ansprüche, wobei die Sicherheitsventileinrichtungen (13, 23) der Tanks einschließlich deren temperatursensiblen Elementen solchermaßen ausgelegt sind, dass ein temperaturbedingtes Öffnen der Sicherheitsventileinrichtung (13) eines der Tanks (1) auch an der Sicherheitsventileinrichtung(en) (23) des oder zumindest eines anderen Tanks (2) ein Ausströmen von im Tank befindlichem Brennstoff ermöglicht.

5. Kraftfahrzeug nach Anspruch 4, wobei die Sicherheitsventileinrichtungen (13, 23) der Tanks (1, 2) solchermaßen angeordnet sind, dass eine Abblaseöffnung (5) einer ersten Sicherheitsventileinrichtung (13), deren temperatursensibles Element nahe einer ersten Fahrzeugseite liegt, zum nahe einer zweiten Fahrzeugseite liegenden temperatursensiblen Element einer zweiten Sicherheitsventileinrichtung (23) hin ausgerichtet ist.

6. Kraftfahrzeug nach Anspruch 4 oder 5, wobei die Sicherheitsventileinrichtungen (13, 23) zumindest zweier Tanks über eine Druckleitung (6) miteinander verbunden sind, welche an die dem Speichervolumen des jeweiligen Tanks (1, 2) zugewandte Seite der Sicherheitsventileinrichtungen (13, 23) angeschlossen ist.

7. Kraftfahrzeug nach Anspruch 6 mit einer gemeinsamen Befüll- und Entnahmeventilvorrichtung (11, 21) für zumindest zwei Brennstoff-Tanks.

8. Kraftfahrzeug nach einem der vorangegangenen Ansprüche, wobei diejenigen Bereiche des Fahrzeug-Aufbaus, welche einen die Räder der tanknahen Achse umgebenden Raum begrenzen, flammhemmend ausgebildet sind.

## Claims

1. Double-track multiple-axle motor vehicle having at least two fuel tanks (1, 2), in which a fuel for generating drive energy for a vehicle drive unit is storable at high pressure in the order of magnitude of 300 bar and more, each tank (1, 2) including a safety valve device (13, 23) having a temperature-sensitive element which monitors only a partial region of the tank surface and allows at least a partial quantity of the stored fuel to escape from the particular tank (1, 2) at higher temperatures, which occur for example in the case of a fire,
**characterised in that** the temperature-sensitive elements of at least two tanks (1, 2) are arranged such that the spacing between a left-side wheel (RL) of that vehicle axle, in the vicinity of which the at least two fuel tanks (1, 2) are arranged in the vehicle, and the temperature-sensitive element which lies closest to this wheel (RL) does not differ significantly from the spacing of the other one of these two temperature-sensitive elements from the right-side wheel (RR) of this axle.

2. Motor vehicle according to claim 1, having at least approximately cylindrical fuel tanks (1, 2) which are installed so as to lie with their cylinder axis in the direction transverse to the vehicle, and wherein the temperature-sensitive element of one tank is arranged to lie on the left in the vehicle, and that of the other fuel tank is arranged to lie on the right in the vehicle.

3. Motor vehicle according to claim 1 or 2, wherein the tanks (1, 2) are arranged such that a filling and removal valve apparatus (11, 21) of each tank lies on the same side in relation to the floor area of the vehicle.

4. Motor vehicle according to any one of the preceding claims, wherein the safety valve devices (13, 23) of the tanks including the temperature-sensitive elements thereof are configured such that a temperature-induced opening of the safety valve device (13) of one of the tanks (1) makes an outflow of the fuel which is situated in the tank possible also at the safety valve device(s) (23) of the other tank or of at least one other tank (2) .

5. Motor vehicle according to claim 4, wherein the safety valve devices (13, 23) of the tanks (1, 2) are arranged such that a blow-off opening (5) of a first safety valve device (13), the temperature-sensitive element of which lies close to a first vehicle side, is oriented toward the temperature-sensitive element of a second safety valve device (23) which lies close to a second vehicle side.

6. Motor vehicle according to claim 4 or 5, wherein the safety valve devices (13, 23) of at least two tanks are connected to one another via a pressure line (6) which is connected to the side of the safety valve devices (13, 23) which faces the storage volume of the particular tank (1, 2).

7. Motor vehicle according to claim 6, having a common filling and removal valve apparatus (11, 21) for at least two fuel tanks.

8. Motor vehicle according to any one of the preceding claims, wherein those regions of the vehicle body which delimit a space which surrounds the wheels of the axle which is close to the tanks are formed to be flame retardant.

## Revendications

1. Véhicule automobile à plusieurs essieux et à deux lignes de roues ayant au moins deux réservoirs de carburant (1, 2) dans lesquels peut être stocké un carburant permettant d'obtenir l'énergie d'entraînement d'un ensemble d'entraînement du véhicule, ce sous une haute pression de l'ordre de 300 bar et plus, chaque réservoir (1, 2) comprenant un dispositif de soupape de sécurité (13, 23) comportant un élément sensible à la température ne surveillant qu'une zone partielle de la surface du réservoir, qui pour des températures élevées, par exemple pour des températures apparaissant lors d'un incendie laisse s'échapper du réservoir (1, 2) respectif au moins une quantité partielle du carburant stocké dans celui-ci,
**caractérisé en ce que**
les éléments sensibles à la température des deux réservoirs (1, 2) sont installés de sorte que la distance entre la roue gauche (RL) de l'essieu du véhicule au voisinage duquel sont installés les deux réservoirs de carburant (1, 2) dans le véhicule et l'élément sensible à la température le plus proche de cette roue (RL) ne diffère pas de façon significative de la distance entre l'autre élément sensible à la température et la roue droite (RR) de cet essieu.

2. Véhicule conforme à la revendication 1,
ayant des réservoirs de carburant (1, 2) au moins essentiellement cylindriques dont les axes sont montés dans la direction transversale du véhicule, l'élément sensible à la température de l'un des réservoirs étant situé à gauche dans le véhicule et l'élément sensible à la température de l'autre réservoir étant situé à droite dans le véhicule.

3. Véhicule conforme à la revendication 1 ou 2,
dans lequel les réservoirs (1, 2) sont installés de sorte qu'un dispositif de soupape de remplissage et de soutirage (11, 21) de chaque réservoir soit situé du même côté par rapport à la surface de base du véhicule.

4. Véhicule conforme à l'une des revendications précédentes,
dans lequel les dispositifs de soupape de sécurité (13, 23) des réservoirs, y compris leurs éléments sensibles à la température sont conçus de sorte qu'une ouverture conditionnée par la température du dispositif à soupape de sécurité (13) de l'un des réservoirs (1) permette également un échappement du carburant situé dans l'autre réservoir (2) par le dispositif à soupape de sécurité (23) de cet autre réservoir (2).

5. Véhicule conforme à la revendication 4,
dans lequel les dispositifs de soupape de sécurité (13, 23) des réservoirs (1, 2) sont installés de sorte qu'une ouverture de décharge (5) d'un premier dispositif de soupape de sécurité (13) dont l'élément sensible à la température est situé à proximité d'un premier côté du véhicule soit orienté vers l'élément sensible à la température du second dispositif de soupape de sécurité (23) situé à proximité du second côté du véhicule.

6. Véhicule conforme à la revendication 4 ou 5,
dans lequel les dispositifs de soupape de sécurité (13, 23) des deux réservoirs sont reliés par l'intermédiaire d'une conduite de pression (6) qui est connectée au côté des dispositifs de soupape de sécurité (13, 23) tourné vers les volumes de stockage des réservoirs (1, 2) respectifs.

7. Véhicule conforme à la revendication 6,
équipé d'un dispositif de soupape de remplissage et de soutirage (11, 21) commun pour les deux réservoirs de carburant.

8. Véhicule conforme à l'une des revendications précédentes,
dans lequel les zones de la carrosserie du véhicule qui délimitent le volume entourant les roues de l'essieu voisin des réservoirs sont ignifugées.
